# EUROPÄISCHE PATENTSCHRIFT

(11) **EP 1 030 530 B1**
(45) Veröffentlichungstag und Bekanntmachung des Hinweises auf die Patenterteilung: **25.10.2006**
(21) Anmeldenummer: 00103531.0
(22) Anmeldetag: 18.02.2000
(51) Int. Cl.: H04Q 7/38, H04L 12/56, H04L 29/06

(54) **Verfahren zum übertragen paketvermittelter Daten in einem Funk-Kommunikationssystem**
Method for transmission of packet switched data in a radio communication system
Procédé pour la transmission de données à commutation par paquets dans un système de radiocommunication

(30) Priorität: 19.02.1999 DE 19907085
(43) Veröffentlichungstag der Anmeldung: 23.08.2000
(73) Patentinhaber: SIEMENS AKTIENGESELLSCHAFT, 80333 München (DE)
(72) Erfinder: Schulz, Egon, Dr., 80993 München (DE); Mitjana, Enric, 89522 Heidenheim (DE)

(56) Entgegenhaltungen:
- US-A- 5 864 540
- SIGLE R ET AL: "Fair queueing wireless ATM MAC protocols" PERSONAL, INDOOR AND MOBILE RADIO COMMUNICATIONS, 1998. THE NINTH IEEE INTERNATIONAL SYMPOSIUM ON BOSTON, MA, USA 8-11 SEPT. 1998, NEW YORK, NY, USA,IEEE, US, 8. September 1998 (1998-09-08), Seiten 55-59, XP010314766 ISBN: 0-7803-4872-9
- N. GIROUX, SUDHAKAR, G.: "Queuing and Scheduling; Quality of service in ATM networks, Ch. 5" 1998 , PRENTICE HALL XP002260612 * Seite 85-121 *

## Beschreibung

Die Erfindung betrifft ein Verfahren zum Übertragen paketvermittelter Daten in einem Funk-Kommunikationssystem und eine Einrichtung zur Durchführung des Verfahrens.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für das eingeführte GSM-Mobilfunksystem (Global System for Mobile Communications) werden Frequenzen bei 900, 1800 und 1900 MHz genutzt. Für zukünftige Mobilfunksysteme mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Während beim GSM-Mobilfunksystem ursprünglich die Übertragung von Sprachinformationen im Vordergrund stand, werden im zunehmenden Maße z.B. durch GPRS (general packet radio system) auf der Basis des GSM-Mobilfunksystems und für zukünftige Systeme von Anfang an auch Paketdatendienste eingeplant. Verschiedene Dienste sind dabei vorgesehen, die variable Datenraten und sehr individuelle Anforderungen an Verzögerungszeiten und Datenrate haben.

Bei einer Paketdatenübertragung werden Datenpakete nicht verbindungsorientiert, d.h. eine Übertragungsressource ist ständig der Verbindung zugeordnet, sondern paketorientiert vermittelt. Die Ressource wird also erst zugeordnet, wenn tatsächlich ein Datenpaket übertragen wird. Dazu werden die Datenpakete bei der Sendeseite bis zu ihrem Sendezeitpunkt nach einer Ressourcenzuordnung zwischengespeichert. Bisher ist für die Zwischenspeicherung eine Warteschlange vorgesehen, in der die Datenpakete aller Verbindungen und Dienste gemeinsam aufgereiht sind und entsprechend ihrer Reihenfolge abgearbeitet werden.

Werden alle Datenpakete in einer Warteschlange gesammelt, dann ist es wahrscheinlich, daß eine Verbindung mit nur wenigen Datenpaketen sehr spät Ressourcen zugeteilt bekommt, da z.B. zuerst die Datenpakete einer Verbindung mit vielen Datenpaketen nach dem FIFO-Prinzip (first in first out) bearbeitet wird. Die Qualität der Verbindung mit nur wenigen Datenpaketen würde damit aufgrund der auftretenden hohen Zeitverzögerung stark beeinträchtigt werden.

Bei hoher Auslastung der Ressourcen kann durch diese Verarbeitung mit einer Warteschlange den verbindungsindividuellen Anforderungen nur schwer entsprochen werden.

Aus Personal, Indoor And Mobile Radio Communications, 1998; The Ninth IEEE International Symposium on Boston, Ma, USA, 8-11 Sept. 1998, New York, NY, US, Seiten 55-59 ist ein "Scheduler" in einer Basisstation innerhalb eines drahtlosen ATM-Kommunikationsnetzes bekannt.

Aus US-A-5,864,540 ist ein "Scheduling"-Verfahren innerhalb eines paketorientierten Kommunikationsnetzes ohne Bezug auf mobile Netze bekannt. Beide Scheduling-Verfahren verwenden gewichtete FIFO-Strategien. Jedoch liefern beide bekannte Verfahren keine zufrieden stellende Lösung hinsichtlich der genannten verbindungsindividuellen Anforderungen.

Der Erfindung liegt folglich die Aufgabe zugrunde, eine verbesserte Verarbeitung von paketvermittelten Daten anzugeben. Diese Aufgabe wird durch das Verfahren mit den Merkmalen des Anspruchs 1 und die Einrichtung nach Anspruch 18 gelöst. Vorteilhafte Weiterbildungen der Erfindung sind den Unteransprüchen zu entnehmen.

Es wird von einem Verfahren zum Übertragen paketvermittelter Daten in einem Funk-Kommunikationssytem ausgegangen, bei dem Datenpakete mehrerer Verbindungen (bearer) zwischen einer netzseitigen Einrichtung und Teilnehmerstationen über eine Funkschnittstelle übertragen werden. Erfindungsgemäß ist sendeseitig pro Verbindung eine individuelle Warteschlage für die zu übertragenden Datenpakete einer Verbindung vorgesehen. Die Reihenfolge der Übertragung der Datenpakete aus den Warteschlangen wird dabei nach warteschlangenindividuellen Kenngrößen bestimmt. Somit müssen nicht alle Dienste gleich behandelt werden, sondern können nach frei definierbaren Kenngrößen, die beispielsweise Prioritäten der einzelnen Warteschlangen sind, vorrangig oder mit geringerer Dringlichkeit bedient werden. Einem Überlaufen der Warteschlange und dem damit verbundenen Verlorengehen von Datenpaketen oder dem Abbruch der Verbindung kann besser begegnet werden.

Vorteilhafterweise sind die warteschlangenindividuellen Kenngrößen auf eine der Warteschlange zugeordneten Priorität bezogen. Eine Warteschlage mit höherer Priorität wird dabei bevorzugt behandelt, die Ressourcen werden also nicht gleichrangig auf die Dienste aufgeteilt. Damit ist die Dienstqualität einer Verbindung individuell einstellbar.

Ist die Priorität für Teilnehmerstationen in Bereichen mit schlechter Empfangbarkeit geringer als in Bereichen mit guter Empfangbarkeit, dann werden unnötige Wiederholungen vermieden. Erreicht eine Teilnehmerstation wiederum ein Gebiet mit besserer Empfangbarkeit, dann kann die Priorität erhöht und die noch wartenden Datenpakete beschleunigt übertragen werden.

Nach Weiterführungen der Erfindung wird die Priorität abhängig von der Anzahl der in der jeweiligen Warteschlange zwischengespeicherten Datenpakete vergeben oder orientiert sich an einer verbindungs- bzw. dienstindividuellen, maximal erlaubten Verzögerungszeit. Je mehr Datenpakete bereits warten, umso größer ist die Verzögerungszeit. Durch eine unterschiedliche Priorisierung können bestimmte Verbindungen oder Dienste bevorzugt werden. Ein Netzbetreiber kann dies zur Leistungsdifferenzierung nutzen.

Weiterhin ist die Priorität von Warteschlangen mit wiederholt zu übertragenden Datenpaketen höher als von Wartschlangen ohne wiederholt zu übertragende Datenpakete. Eine Datenpaketwiederholung nach einem ARQ-Protokoll (automatic repeat request) ist durch schlechte Empfangbarkeit des zuvor gesendeten gleichartigen Datenpaketes hervorgerufen worden, so daß eine bevorzugte schnelle Wiederholung die Verzögerungszeit entscheidend zu senken hilft.

Vorteilhaft ist es ebenso, wenn die Priorität einer Warteschlange einer Verbindung mit nur wenigen zu übertragenden Datenpaketen höher ist als die einer gleichartigen Verbindung mit einer größeren Anzahl zu übertragender Datenpakete. Bei vielen zu übertragenden Datenpaketen ist eine kleine zusätzliche Verzögerung für den Teilnehmer wenig störend. Der Teilnehmer mit nur wenigen Datenpaketen wird die schnelle Übertragung dafür eher honorieren.

Die Prioritätsvergabe kann nach einer vorteilhaften Ausgestaltung für Verbindungen zu oder von sich schnell bewegenden Teilnehmerstationen größer sein als zu oder von sich langsamer bewegenden Teilnehmerstationen. Sich schnell bewegende Teilnehmerstationen werden eine Funkzelle bald wieder verlassen, so daß es ratsam ist, sie schnell zu versorgen und keine noch nicht gesendete Datenpakete bei einem Zellwechsel zwischen den Basisstationen übertragenen zu müssen.

Die genannten Möglichkeiten der Festlegung der Prioritäten können auch kombiniert werden. Während der Abarbeitung der Warteschlangen werden die Prioritäten der Warteschlangen fortlaufend angepaßt, um den sich verändernden Bedingungen der Übertragungskanäle zu entsprechen.

Nach weiteren Ausgestaltungen der Erfindung sind die warteschlangenindividuellen Kenngrößen auf eine dem durch die jeweilige Verbindung unterstützten Dienst zugeordneten Priorität bezogen. Wird also durch die Verbindung ein bestimmter Dienst unterstützt, so wird als Anfangswert diesem Dienst und damit seiner Warteschlange eine bestimmte Priorität zugewiesen. Vorteilhafterweise ist die Priorität proportional zur Datenrate des Dienstes und/oder umgekehrt proportional zu einer garantierten Minimalverzögerung für den Dienst. Die Priorität könnte auch durch den Teilnehmer vorgegeben werden.

Im folgenden wird die Erfindung anhand eines Ausführungsbeispiels bezugnehmend auf zeichnerische Darstellungen näher erläutert.

Dabei zeigen
- Fig 1: ein Blockschaltbild eines Mobilfunksystems,
- Fig 2: eine Einrichtung zu Übertragung paketvermittelter Daten mit mehreren Warteschlangen, und
- Fig 3: eine Verarbeitung der Datenpakete für eine Warteschlange.

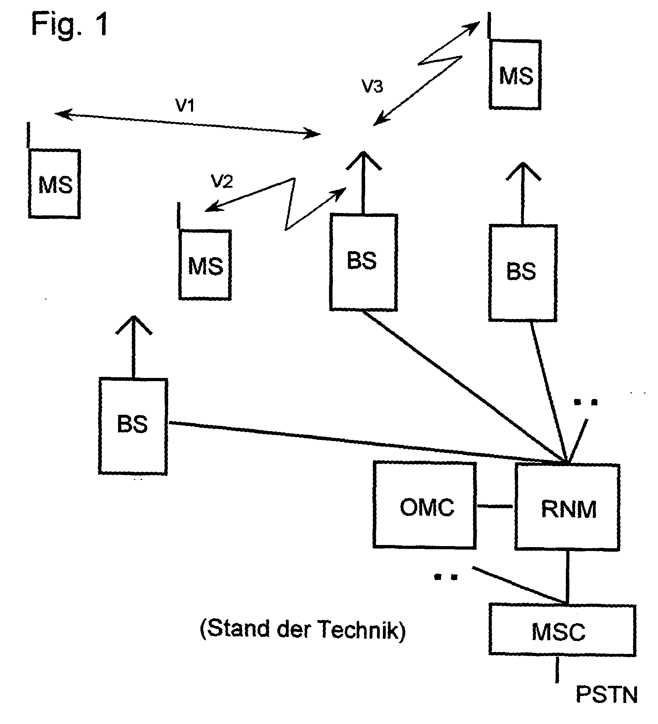

Das in Fig 1 dargestellte Mobilfunksystem als Beispiel eines Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Netzseitige Einrichtungen, in denen später erläuterte Warteschlangen für die Datenpakete vorgesehen sind, sind die Basisstationen BS bzw. die Einrichtung RNM zum Zuteilen von funktechnischen Ressourcen.

Eine solche Basisstation BS kann über eine Funkschnittstelle eine Verbindung zu Teilnehmerstationen, z.B. Mobilstationen MS oder anderweitigen mobilen und stationären Endgeräten, aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In Fig 1 sind beispielhaft bestehende Verbindungen V1, V2, V3 zur Übertragung von Nutzinformationen und Signalisierungsinformationen zwischen Mobilstationen MS und einer Basisstation BS dargestellt. Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Die im folgenden gezeigte Verarbeitung von Datenpaketen der Verbindungen V1, V2, V3 vor einem Senden wird anhand der Abwärtsrichtung der Übertragung, also von der Basisstation BS zu den Mobilstationen MS gezeigt. Die Einrichtung ist hierbei in der Basisstation BS realisiert. Es liegt jedoch ebenso im Rahmen der Erfindung, daß die Verarbeitung für die umgekehrte Übertragungsrichtung durchgeführt wird, falls von einer Mobilstation MS mehrere Verbindungen bzw. Dienste ausgehen. Die zu übertragenden Datenpakete enthalten Nutzinformationen oder Signalisierungsinformationen. In einem Datenpaket können auch unterschiedliche Informationen übertragen werden.

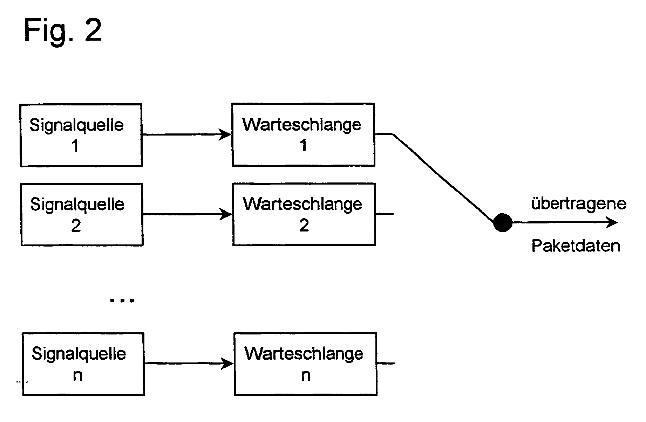

Entsprechend Fig 2 wird von einer größeren Anzahl von Verbindungen (bearer) ausgegangen, die jeweils individuelle Anforderungen der zu unterstützenden Dienste haben. Die Einrichtung zur Übertragung der Datenpakete weist den Warteschlangen, die verbindungsindividuell eingerichtet sind, Übertragungsressourcen zu. Die Zuweisung der Ressourcen erfolgt entsprechend der Prioritäten, die den Warteschlangen zugeordnet sind.

Die Zuordnung der Prioritäte erfolgt nach einer der folgenden Kriterien:
- alle Warteschlangen mit zu übertragenden Datenpaketen haben die gleich Priorität,
- Warteschlangen mit langen zu übertragenden Datenpaketen haben eine hohe Priorität,
- Warteschlangen haben eine Priorität entsprechend der Anzahl zwischengespeicherter Datenpakete (viele Datenpakete = hohe Priorität),
- Warteschlangen für Verbindungen mit geringer maximal erlaubter Verzögerungszeit erhalten eine hohe Priorität, dabei wird ggf. die aktuelle Verzögerung bereits berücksichtigt.

Die Prioritäten der einzelnen Warteschlangen können sich additiv erhöhen, zum Beispiel folgt aus hoher Datenrate und geringer Zeitverzögerung eine sehr hohe Priorität. Die Gesamtpriorität kann aber eine maximale obere Schranke nicht überschreiten.

Der Teilnehmer kann eine Mindest-Priorität vorgeben, die der Betreiber dem Teilnehmer zuvor zugeteilt hat. Es kann im System eine maximale Priorität geben zum Beispiel die Stufen 1 (sehr hoch) bis 10 (sehr niedrig).

Weitere Anhaltspunkte zur Bestimmung der Priorität der Warteschlangen wurden bereits diskutiert.

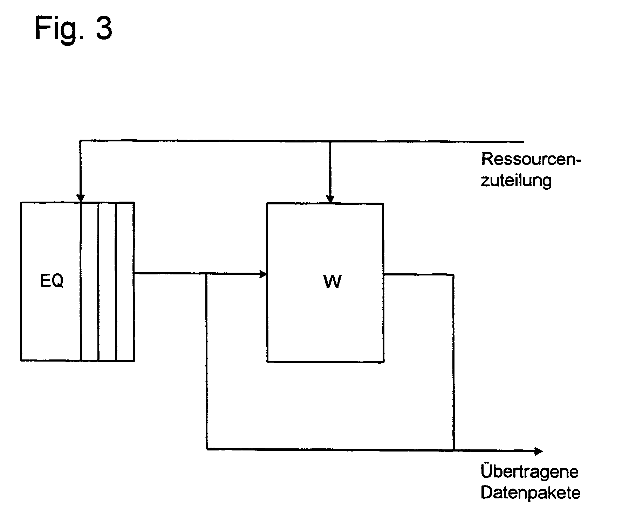

Jeder der in Fig 2 gezeigten Warteschlangen übergibt ein Datenpaket zum Senden, wenn sie dazu durch den Übertragungsalgorithmus angeregt wird. Das Datenpaket kann dabei zum ersten oder wiederholten Mal übertragen werden. Eine wiederholte Übertragung erfolgt, wenn eine negative Empfangsbestätigung NACK vorliegt. Datenpakete, deren Empfang bestätigt wurden, können entfernt werden. Die Anzahl übertragener und noch nicht bestätigter Datenpaket darf die in Fig 3 gezeigte Fensterlänge nicht überschreiten.

Die von einer Datenquelle eintreffenden Datenpakete werden in einem Eingangsspeicher EQ (entrance queue) der Warteschlange zwischengespeichert und erst in einen Zwischenspeicher W (Window) weitergereicht, wenn sie zum ersten Mal gesendet wurden. Die Parameter des Zwischenspeichers W werden bei jeder Übertragung aktualisiert. Die Datenpakete bleiben im Zwischenspeicher W bis eine Bestätigungsmeldung über den erfolgreichen Empfang eintrifft und erst dann entfernt.

Eine negative Bestätigungsmeldung NACK bewirkt, daß das betroffene Datenpaket im Zwischenspeicher W verbleibt und die Priorität der Warteschlange erhöht wird. Bei der nächsten Ressourcenzuteilung zur Warteschlange wird das erste Datenpaket des Zwischenspeichers W übertragen.

Verschlechtern sich die Übertragungsbedindungen für die Verbindung, dann wird eine Übergabe der Übertragung der Datenpakete an eine andere Basisstation versucht. Kann eine Verbindung zur anderen Basisstation erfolgreich aufgebaut werden, dann wird zumindest ein Datenpaket aus der Warteschlange zur anderen Basisstation über eine netzseitige Verbindung übertragen. Die Warteschlange für die Verbindung wird dann aufgelöst.

Beim Wechsel in eine andere Zelle werden die Parameter der Warteschlange, insbesondere die Priorität, mit übergeben. Beim Wechsel in ein anderes System können die Prioritäten neu bestimmt werden.

## Patentansprüche

1. Verfahren zum Übertragen paketvermittelter Daten in einem Funk-Kommunikationssystem, bei dem
Datenpakete mehrerer Verbindungen zwischen einer netzseitigen Einrichtung (BS) und Teilnehmerstationen (MS) über eine Funkschnittstelle übertragen werden,
sendeseitig pro Verbindung eine individuelle Warteschlange für die zu übertragenden Datenpakete einer Verbindung vorgesehen ist, und
die Reihenfolge der Übertragung der Datenpakete aus den Warteschlangen nach warteschlangenindividuellen Kenngrößen bestimmt wird, wobei die warteschlangenindividuellen Kenngrößen auf eine der Warteschlange zugeordneten Priorität bezogen sind,
**dadurch gekennzeichnet, dass**
die Priorität für Teilnehmerstationen in Bereichen mit schlechter Empfangbarkeit geringer ist als in Bereichen mit guter Empfangbarkeit.

2. Verfahren nach Anspruch 1, bei dem
die Priorität abhängig von der Anzahl der in der jeweiligen Warteschlange zwischengespeicherten Datenpakete vergeben wird.

3. Verfahren nach Anspruch 1, bei dem
die Priorität von Warteschlangen mit wiederholt zu übertragenden Datenpaketen höher ist als von Wartschlangen ohne wiederholt zu übertragende Datenpakete.

4. Verfahren nach Anspruch 1, bei dem
die Priorität durch eine verbindungsindividuelle, maximal erlaubte Verzögerungszeit bedingt ist.

5. Verfahren nach Anspruch 1, bei dem
die Priorität einer Warteschlange einer Verbindung mit nur wenigen zu übertragenden Datenpaketen höher ist als die einer gleichartigen Verbindung mit einer größeren Anzahl zu übertragender Datenpakete.

6. Verfahren nach Anspruch 1, bei dem
die Priorität von Warteschlangen für Verbindungen zu oder von sich schnell bewegenden Teilnehmerstationen (MS) größer ist als zu oder von sich langsamer bewegenden Teilnehmerstationen (MS).

7. Verfahren nach einem der vorherigen Ansprüche, bei dem die Datenpakete Nutzinformationen enthalten.

8. Verfahren nach einem der Ansprüche 1 bis 6, bei dem die Datenpakete Signalisierungsinformationen enthalten.

9. Verfahren nach einem der vorherigen Ansprüche, bei dem
die Prioritäten der Warteschlangen fortlaufend angepasst werden.

10. Verfahren nach Anspruch 1, bei dem
die warteschlangenindividuellen Kenngrößen auf eine dem durch die jeweilige Verbindung unterstützten Dienst zugeordneten Priorität bezogen sind.

11. Verfahren nach Anspruch 10, bei dem
die Priorität proportional zur Datenrate des Dienstes ist.

12. Verfahren nach Anspruch 10, bei dem
die Priorität umgekehrt proportional zu einer garantierten Minimalverzögerung für den Dienst ist.

13. Verfahren nach einem der vorherigen Ansprüche, bei dem im Fall einer Übergabe der Übertragung der Datenpakete einer Verbindung an eine weitere im Funkkommunikationsnetz vorhandenen Basisstation (BS) zumindest ein Datenpaket aus der Warteschlange zur weiteren Basisstation (BS) netzseitig übertragen wird.

14. Verfahren nach einem der vorherigen Ansprüche, bei dem eine Verbindung mehrere Dienste hat und für zumindest zwei der Dienste getrennte Wartschlangen vorgesehen sind.

15. Verfahren nach einem der vorherigen Ansprüche, bei dem bei einem Zellenwechsel einer Verbindung zwischen zwei Basisstationen die Kenngrößen der Warteschlange erhalten und der neuen Basisstation übermittelt werden.

16. Verfahren nach Anspruch 1, bei dem beim Übergang einer Verbindung in ein anderes Funk-Kommunikationssystem die Priorität neu bestimmt wird.

17. Verfahren nach Anspruch 1, bei dem die Priorität durch die Teilnehmerstation (MS) vorgegeben wird.

18. Einrichtung zur Durchführung des Verfahrens nach Anspruch 1 aufweisend:
Mittel zum Übertragen von Datenpaketen mehrerer Verbindungen über eine Funkschnittstelle übertragen werden, wobei pro Verbindung eine individuelle Warteschlange für die zu übertragenen Datenpakete einer Verbindung vorgesehen ist und
Mittel zur Bestimmung der Reihenfolge der Übertragung der Datenpakete aus den Warteschlangen nach warteschlangenindividuellen Kenngrößen, die auf eine der Warteschlange zugeordneten Priorität bezogen sind,
**dadurch gekennzeichnet, dass**
die Priorität für Teilnehmerstationen in Bereichen mit schlechter Empfangbarkeit geringer ist als in Bereichen mit guter Empfangbarkeit.

## Claims

1. Method for transmission of packet switched data in a radio communication system, in which
data packets of a number of connections are transmitted between a base station (BS) and mobile stations (MS) via a radio interface,
an individual queue is provided on the transmit side for each connection for the data packets of a connection to be transmitted, and
the order of the transmission of the data packets from the queues is determined in accordance with queue-individual characteristic data, with the queue-individual characteristic data being related to a priority assigned to the queue,
**characterized in that**,
the priority for mobile stations in areas with bad reception is lower than for areas with good reception.

2. Method in accordance with claim 1, in which
The priority is issued as a function of the number of data packets buffered in the relevant queue.

3. Method in accordance with claim 1, in which
The priority of the queues with data packets to be transmitted repeatedly is higher than that of queues without data packets to be transmitted repeatedly.

4. Method in accordance with claim 1, in which
the priority is dictated by the maximum delay time allowed for the individual connection.

5. Method in accordance with claim 1, in which
the priority of a queue of a connection with only a few data packets to be transmitted is higher than that of a similar type of connection with greater number of data packets to be transmitted.

6. Method in accordance with claim 1, in which
the priority of queues for connections to or from fast-moving mobile stations (MS) is greater than it is for slow-moving mobile stations (MS).

7. Method in accordance with one of the previous claims in which the data packets contain payload information.

8. Method in accordance with one of the claims 1 to 6, in which the data packets contain signalling information.

9. Method in accordance with one of the previous claims in which the priorities of the queues are continuously adapted.

10. Method in accordance with claim 1, in which
the characteristic data for individual queues is related to a priority assigned to the service supporting the connection concerned.

11. Method in accordance with claim 10, in which the priority is proportional to the data rate of the service.

12. Method in accordance with claim 10, in which
the priority is inversely proportional to a guaranteed minimum delay for the service.

13. Method in accordance with one of the previous claims, in which in the case of a transfer of the transmission of the data packets of a connection to a further base station (BS) present in the communication network, at least one data, packet is transmitted from the queue to the further base station (BS) on the network side.

14. Method in accordance with one of the previous claims, in which a connection has a number of services and separate queues are provided for at least two of the services.

15. Method in accordance with one of the previous claims, in which for a handover of a connection between two base stations, the characteristic values of the queue are retained and transferred to the new base station.

16. Method in accordance with claim 1, in which for handover of a connection into another radio communication system a new priority is determined.

17. Method in accordance with claim 1, in which the priority is predetermined by the mobile station (MS).

18. Device for executing a method in accordance with claim 1 featuring:
Means for transmitting data packets of a number of connections, whereby an individual queue is provided for the data packets of a connection to be transmitted and means for determining the sequence of the data packets from the queues according to characteristic values for the individual queues which are related to the priority assigned to the queue,
**characterized in that**,
the priority for mobile stations in areas with bad reception is lower than for areas with good reception.

## Revendications

1. Procédé pour la transmission de données transmises par paquet dans un système de radiocommunication, dans lequel des paquets de données de plusieurs liaisons sont transmis par une interface radio entre un dispositif (BS) côté réseau et des stations d'abonnés (MS), une queue d'attente individuelle est prévue par liaison côté émission pour les paquets de données à transmettre d'une liaison, et l'ordre de succession de la transmission des paquets de données provenant des queues d'attente est déterminé selon des grandeurs caractéristiques individuelles par queue d'attente, les grandeurs caractéristiques individuelles par queue d'attente étant rapportées à une priorité attribuée à la queue d'attente,
**caractérisé en ce que**
la priorité pour les stations d'abonnés dans des régions avec une mauvaise réceptibilité est plus faible que dans des régions avec une bonne réceptibilité.

2. Procédé selon la revendication 1, dans lequel
la priorité est attribuée en fonction du nombre des paquets de données stockées provisoirement dans la queue d'attente respective.

3. Procédé selon la revendication 1, dans lequel
la priorité des queues d'attente avec des paquets de données à transmettre de façon répétée est plus élevée que celle des queues d'attente sans paquets de données à transmettre de façon répétée.

4. Procédé selon la revendication 1, dans lequel
la priorité est conditionnée par une temporisation maximale autorisée, individuelle par liaison.

5. Procédé selon la revendication 1, dans lequel
la priorité d'une queue d'attente d'une liaison avec seulement quelques paquets de données à transmettre est plus élevée que celle d'une liaison similaire avec un nombre plus grand de paquets à transmettre.

6. Procédé selon la revendication 1, dans lequel
la priorité des queues d'attente pour des liaisons allant vers ou partant de stations d'abonnés (MS) se déplaçant rapidement est supérieure à celle des liaisons allant vers ou partant de stations d'abonnés (MS) se déplaçant plus lentement.

7. Procédé selon l'une quelconque des revendications précédentes, dans lequel les paquets de données contiennent des informations utiles.

8. Procédé selon l'une quelconque des revendications 1 à 6, dans lequel les paquets de données contiennent des informations de signalisation.

9. Procédé selon l'une quelconque des revendications précédentes, dans lequel les priorités des queues d'attente sont adaptées de façon permanente.

10. Procédé selon la revendication 1, dans lequel
les grandeurs caractéristiques individuelles par queue d'attente sont rapportées à une priorité attribuée au service supporté par la liaison respective.

11. Procédé selon la revendication 10, dans lequel
la priorité est proportionnelle au débit de données du service.

12. Procédé selon la revendication 10, dans lequel
la priorité est inversement proportionnelle à une temporisation minimale garantie pour le service.

13. Procédé selon l'une quelconque des revendications précédentes, dans lequel
dans le cas d'un transfert de la transmission des paquets de données d'une liaison à une autre station de base (BS) présente dans le réseau de radiocommunication, au moins un paquet de données est transmis côté réseau de la queue d'attente à l'autre station de base (BS).

14. Procédé selon l'une quelconque des revendications précédentes, dans lequel une liaison a plusieurs services et des queues d'attente séparées sont prévues pour au moins deux des services.

15. Procédé selon l'une quelconque des revendications précédentes, dans lequel, lors d'un changement de cellule d'une liaison entre deux stations de base, les grandeurs caractéristiques de la queue d'attente sont conservées et sont transmises à la nouvelle station de base.

16. Procédé selon la revendication 1, dans lequel la priorité est redéfinie lors du transfert d'une liaison dans un autre système de radiocommunication.

17. Procédé selon la revendication 1, dans lequel la priorité est prédéfinie par la station d'abonné (MS).

18. Dispositif pour la mise en oeuvre du procédé selon la revendication 1 présentant :
des moyens pour la transmission de paquets de données de plusieurs liaisons par une interface radio, une queue d'attente individuelle étant prévue par liaison pour les paquets de données à transmettre d'une liaison et
des moyens pour la détermination de l'ordre de succession de la transmission des paquets de données provenant des queues d'attente selon des grandeurs caractéristiques individuelles par queue d'attente, qui sont rapportées à une priorité attribuée à la queue d'attente,
**caractérisé en ce que**
la priorité pour les stations d'abonnés dans des régions avec une mauvaise réceptibilité est plus faible que dans des régions avec une bonne réceptibilité.
